# EUROPEAN PATENT APPLICATION

(11) **EP 2 940 631 A1**
(43) Date of publication of application: **04.11.2015**
(21) Application number: 14198670.3
(22) Date of filing: 17.12.2014
(51) Int. Cl.: G06Q 10/06, G06F 17/30, G06Q 30/00, G06Q 30/02

(54) **Secure multiple customer relationship management interface framework**

(30) Priority: 30.04.2014 US 201414266538
(71) Applicant: SAP SE, 69190 Walldorf (DE)
(72) Inventor: Sundaram P, Meenakshi, 69190 Walldorf (DE)
(74) Representative: Richardt Patentanwälte PartG mbB

(57) **Abstract**

A computer-implemented method of updating a main database 120, 121, 122 of a main computer system 110 using at least one remote computer system 120 is disclosed herein. The main database stores data records, local rule records comprising local rules, and general rule records comprising general rules. The local rules are used for validating change instructions for changing the data records. The general rules are used for generating change instructions for changing the data records and/or local rules.

## Description

### Field of the invention

### Technical Field

The subject matter described herein relates to customer relationship management (CRM) systems. These CRM systems can be used various fields, such as for instance payment systems, customer loyalty interface frameworks, or combinations thereof.

### Background

All companies face a number of different challenges. However, it has become increasingly important for a company to enhance the experience for each customer interacting with it. For example, customer churn, or the circumstance of losing a customer, can be very costly, as it may be many times more expensive to acquire a new customer than to keep an existing one. Thus, companies are seeking ways to retain customers by offering a superior experience, while delivering unique experiences to different customer segments.

In many industries, a relatively small percentage of customers represent a majority of a company's revenue, so a company will invest in the experience offered to high-value customer segments to enhance profitability. Customers today are empowered with information, and they evaluate their relationship with the company with respect to their own unique needs. However, companies often lack a rich set of data about customer behavior and insights. Without a way to collect a robust set of customer data, a company may be inclined to monitor only what is easy to measure, and will usually not develop deep insights derived from customer interactions.

Loyalty management can be implemented by systems across multiple industries where customer loyalty programs are utilized to build customer relationships and to promote specific customer behaviors. Loyalty management enables marketers to plan and execute closed loop loyalty programs, such as frequent flyer programs, for example. These programs can promote customers participation through points/reward programs where certain amounts of points are earned for a specific customer behavior. In turn, customers can redeem these points for specified rewards.

Loyalty programs helps to promote specific customer behaviors by providing benefits (such as rewards for miles flown) which can help enhance the customer experience. While companies often view such point-based programs as a fast way to enhance profitability by inducing customers to buy their goods or services, they are finding that there is a much greater value provided by more comprehensive loyalty programs that rely on the collection of information from program members. Companies can then use this data to develop a 360-degree view of customer interactions and determine how best to tailor process enhancements by segment - particularly for high-value customers. By implementing loyalty programs that are integrated across sales, service, and marketing - i.e., across all channels of interaction - a firm can greatly enhance the customer experience, increase customer retention, and foster the development of a community of people who serve as advocates for the business.

A single loyalty management system for real world customers is not conventionally deployed due to existing complex CRM landscapes, various payment systems, and complex business processes, which are spread across multiple systems. Customers are reluctant to expose their critical data outside their own firewall, so they usually segregate the external facing user interface (UI) and keep the data separately. Presently, in multiple CRM, payment systems, and enterprise resource planning (ERP) systems, i.e. when the UI is one system, the business logic is in another system, and the data is stored across multiple systems, there is no standard framework that can be used to communicate between these multiple CRM systems, payment systems, and ERP systems.

### Summary

A computer-implemented technology for consistent updating in interrelated databases (i.e. a main database and at least one local database) on computer systems is described herein. The main database and the at least one local database, as understood here, are databases operable for performing at least the following: storing, retrieving, and updating data records. The local databases and the main database may have the same types or different types, e.g. Structured Query Language (SQL) type, Not Only SQL (NoSQL) type, etc. Interrelation of the main database and the at least one local database, as understood here, is a configuration of these databases when the local database comprises copies of at least a portion of the data records stored in the main database. Different local databases may comprise copies of the same data record stored in the main database. The data record, as understood herein, is any set of data entities. The data entities may have specific types, e.g. text, digital, Boolean, etc. The data entities stored in the data records may represent data as such; other data entities may specify instructions for changing of the data records; yet another data entities may specify validity criteria for executing changes on data records; yet another data entities may specify selection criteria for the data records. Changes in data records comprise changes in data entities of the data records specified in the change instructions. The changes may be absolute or relevant. For instance, an absolute change may be assigning a new value to one of the data entities of the data record, while a relevant change may be calculating a new data value of the data entity using current value of the data entity to be changed and/or current values of one or more of the other data entities.

This computer-implemented technology may be successfully applied as an electronic payment system. The data records have sufficient functionalities to function as customer accounts. Payments may be performed by executing change instructions to change customer accounts. Another data records (local rule records) specifying validity criteria for executing changes on data records may be used for verification of customer authorizations to perform specific payments, credit limits of customers, etc. Yet another data records (general rule records) determine execution of change instructions to change the customer accounts complying with one or more criteria and execution of change instructions to change the local rules complying with one or more of another criteria. For instance a credit limit specified for the customer account may be modified according to the respective general rule when the customer account complies with a selection criterion, for instance when the customer having this customer account has developed a good credit history. Almost any method for updating interrelated databases is facing contradictory requirements. Different parties perform updates of various data records in interrelated databases. On the other hand these interrelated databases have to be maintained in a way that they store consistent information, i.e. data records stored in these databases are updated in time. Straightforward solution like making one change in one of the interrelated databases at a time and halting operation of entire system until all interrelated databases are updated demands awesome computer resources in order to provide acceptable operation rate of the system.

It is an objective of embodiments of the invention to provide for a computer system for updating a database, a computer-implemented method to perform the same, a computer readable medium having stored thereon a computer executable code for execution by at least one microprocessor controlling the computer system, wherein execution of the instructions of the executable code cause the at least one microprocessor to execute said computer-implemented method, an electronic payment method, a computer system for performing electronic payments according to the electronic payment method, and a computer readable medium having stored thereon a computer executable code for execution by at least one microprocessor controlling the computer system for performing electronic payments, wherein execution of the instructions of the executable code cause the at least one microprocessor to execute said electronic payment method. Advantageous embodiments are described in the dependent claims.

According to one embodiment, the present invention relates to an electronic payment method, wherein execution of payments is registered in a main database of a main computer system using at least one remote computer system. The main database stores customer accounts, local rule records comprising local rules, and general rule records comprising general rules. The local rules are used for validating change instructions for changing the customer accounts. The general rules are used for generating change instructions for changing the customer accounts and/or local rules.

The computer-implemented method comprises the following steps performed on the remote computer system: receiving a payment order from a customer, wherein the payment order is performed by executing a change instruction to change a customer account of the customer; and forwarding the received change instruction to the main computer. The computer-implemented method further comprises the following steps performed on the main computer system: receiving the forwarded change instruction to change said customer account from said remote computer system; generating a change instruction to change said customer account according to the general rule being used for the generating of the change instruction to change said customer account; generating a change instruction to change the local rule according to the general rule being used for the generating of the change instruction to change said local rule; scheduling execution of any generated change instruction prior to execution of any received forwarded change instruction; executing the received forwarded change instruction; executing the generated change instruction to change said customer account; and executing the generated change instruction to change said local rule.

The executing of the generated change instruction to change said local rule comprises: generating a changed local rule using said local rule in the local rule record comprising said local rule according to the generated change instruction to change said local rule; and updating the local rule record comprising said local rule in the main database in accordance with the changed local rule. The executing of the received forwarded change instruction comprises: generating a changed customer account using said customer account stored in the main database according to the received forwarded instruction; and if the generated changed customer account complies with said local rule in the local rule record stored in the main database updating said customer account in the main database in accordance with the changed customer account, wherein said local rule is being used for validating change instructions for changing said customer account. The executing of the generated change instruction to change said customer account comprises: generating another changed customer account using said customer account stored in the main database according to the generated change instruction to change said customer account; and updating said customer account in the main database in accordance with the another changed customer account.

According to one embodiment, the present invention relates to a computer-implemented method of updating a main database of a main computer system using at least one remote computer system. The main database stores data records, local rule records comprising local rules, and general rule records comprising general rules. The local rules are used for validating change instructions for changing the data records. The general rules are used for generating change instructions for changing the data records and/or local rules.

The computer-implemented method comprises the following steps performed on the remote computer system: receiving a change instruction from a user to change the data record; and forwarding the received change instruction to the main computer. The computer-implemented method further comprises the following steps performed on the main computer system: receiving the forwarded change instruction to change said data record from said remote computer system; generating a change instruction to change said data record according to the general rule being used for the generating of the change instruction to change said data record; generating a change instruction to change the local rule according to the general rule being used for the generating of the change instruction to change said local rule; scheduling execution of any generated change instruction prior to execution of any received forwarded change instruction; executing the received forwarded change instruction; executing the generated change instruction to change said data record; and executing the generated change instruction to change said local rule.

The executing of the generated change instruction to change said local rule comprises: generating a changed local rule using said local rule in the local rule record comprising said local rule according to the generated change instruction to change said local rule; and updating the local rule record comprising said local rule in the main database in accordance with the changed local rule. The executing of the received forwarded change instruction comprises: generating a changed data record using said data record stored in the main database according to the received forwarded instruction; and if the generated changed data record complies with said local rule in the local rule record stored in the main database updating said data record in the main database in accordance with the changed data record, wherein said local rule is being used for validating change instructions for changing said data record. The executing of the generated change instruction to change said data record comprises: generating another changed data record using said data record stored in the main database according to the generated change instruction to change said data record; and updating said data record in the main database in accordance with the another changed data record.

These features may be advantageous as they may provide prioritized processing of the change instructions generated using the general rules stored in the main database. As a result thereof the change instruction received from the user is executed using the up to date version of the data record and the user change instruction is validated the using the up to date local rule.

According to another embodiment said remote computer system comprises a local database storing a copy of said customer account and a copy of the local rule record comprising said local rule. The executing of the received forwarded change instruction further comprises sending an update instruction to update the copy of said customer account in the local database in accordance with the changed customer account to said remote computer system if the generated changed customer account complies with said local rule in the local rule record stored in the main database. The executing of the generated change instruction to change said customer account further comprises sending an update instruction to update the copy of said customer account in the local database in accordance with the another changed customer account to said remote computer system. The executing of the generated change instruction to change the local rule further comprises sending an update instruction to update said local rule record in the copy of the local rule record stored in the local database in accordance with the changed local rule to said remote computer system.

The following is further performed on the remote computer system: receiving the update instruction to update the copy of said customer account in the local database; receiving the update instruction to update said local rule in the copy of the local rule record stored in the local database; scheduling execution of any received update instruction prior to execution of any received change instruction; executing the received instruction, executing the received update instruction to update the copy of said customer account in the local database; and executing the received update instruction to update said local rule in the copy of the local rule record stored in the local database. The execution of the received instruction comprises generating yet another changed customer account using the copy of said customer account stored in the local database according the received change instruction, wherein the forwarding of the received change instruction to the main computer is performed when the generated yet another changed customer account complies with said local rule in the copy of the local rule record.

According to another embodiment said remote computer system comprises a local database storing a copy of said data record and a copy of the local rule record comprising said local rule. The executing of the received forwarded change instruction further comprises sending an update instruction to update the copy of said data record in the local database in accordance with the changed data record to said remote computer system if the generated changed data record complies with said local rule in the local rule record stored in the main database. The executing of the generated change instruction to change said data record further comprises sending an update instruction to update the copy of said data record in the local database in accordance with the another changed data record to said remote computer system. The executing of the generated change instruction to change the local rule further comprises sending an update instruction to update said local rule record in the copy of the local rule record stored in the local database in accordance with the changed local rule to said remote computer system.

The following is further performed on the remote computer system: receiving the update instruction to update the copy of said data record in the local database; receiving the update instruction to update said local rule in the copy of the local rule record stored in the local database; scheduling execution of any received update instruction prior to execution of any received change instruction; executing the received instruction, executing the received update instruction to update the copy of said data record in the local database; and executing the received update instruction to update said local rule in the copy of the local rule record stored in the local database. The execution of the received instruction comprises generating yet another changed data record using the copy of said data record stored in the local database according the received change instruction, wherein the forwarding of the received change instruction to the main computer is performed when the generated yet another changed data record complies with said local rule in the copy of the local rule record.

These features may be advantageous as they may provide a pre-check of the change instruction received from the user using copies of the data record and the local rule stored in the local database. The user may validate a number of his change instructions on the remote computer system without sending any instructions/requests to the main computer system. As a result thereof a workload of the main computer system, which may receive a lot of other change instruction from numerous other remote computer systems, is reduced.

According to another embodiment the executing of the received forwarded change instruction further comprises: if the generated changed data record does not comply with said local rule of the local rule record sending a message to said local computer system indicating that the change instruction received from the user does not comply with the local rule in the local rule record stored in the main database. The execution of the received instruction further comprises: sending a message to the user indicating that the change instruction received from the user does not comply with said local rule in the copy of the local rule record stored in the local database if the generated yet another changed data record does not comply with said local rule in the copy of the local rule record. The following is further performed on the remote computer system: sending a message to the user indicating that said data record is updated after the executing of the received update instruction to update the copy of said data record in the local database; receiving the message indicating that the change instruction received from the user does not comply with the local rule in the local rule record stored in the main database; and forwarding the message to the user indicating that the change instruction received from the user does not comply with the local rule in the local rule record stored in the main database.

These features may be advantageous as they may provide information to the user regarding execution or rejection of his change instruction. Moreover the user may be informed about reason of rejection of his change instruction, i.e. whether his change instruction does not comply with the local rule stored in the main database or whether his instruction does not comply with the copy of the local rule stored in the local database. In the latter case the user may wait until the copy of the local rule is updated in the local data base and send his change request once again.

According to another embodiment the updating of said data record in the main database in accordance with the another changed data record and the sending of the update instruction to update the copy of said data record in the local database in accordance with the another changed data record to said remote computer system are performed when the another generated data record complies with said local rule of the local rule record.

These features may be advantageous as they may provide improved consistency of data stored in the main database and improved safety of performance of the database, since instructions to change the data record may originate from any of the remote computer systems or from the main computer system itself.

According to another embodiment the general rules are used for generating change instructions for changing the data records complying with data record selection criteria and/or the local rules complying with local rule selection criteria, wherein the generating of the change instruction to change said data record according to the general rule being used for the generating of the change instruction to change said data record is performed if said data record complies with at least one of the data record selection criteria enabling the generating of the change instruction to change said data record, wherein the generating of the change instruction to change said local rule according to the general rule being used for the generating of the change instruction to change said local rule is performed if said local rule complies with at least one of the local rule selection criteria enabling the generating of the change instruction to change said local rule.

The features may be advantageous as they may provide functionalities to perform changes of the data records and the local rules on the main computer system. These change instructions may be generated in batches and/or in an automatic mode after identification of the local rules and/or the data records complying with the respective selection criteria. The schedule of this batch generation of the change instructions may be selected in a way enabling optimum workload of the main system. For instance these change instructions may be generated in time intervals when user activity is low, i.e. number of received change instructions from users on the main computer system is below a predetermined threshold value.

According to another embodiment the executing of the generated change instruction to change said data record is performed if said data record complies with the at least one of the data record selection criteria enabling the generating of the change instruction to change said data record, wherein the executing of the generated change instruction to change said local rule is performed if said local rule complies with the at least one of the local rule selection criteria enabling the generating of the change instruction to change said local rule.

These features may be advantageous as they may provide improved consistency of data stored in the main database and improved safety of performance of the database, since instructions to change the data record may originate from any of the remote computer systems or from the main computer system itself, thus due to execution of other change instructions said data record may no longer comply with at least one of the data record selection criteria enabling the generating of the change instruction to change said data record. Rechecking of the same condition during execution of said change instruction confirms validity of the said change instruction.

According to another embodiment the general rules are used for generating change instructions for changing the local rules complying with local rule selection criteria and/or the data records having the respective local rules for validating the change instructions for changing them, wherein the respective rules comply with other local rule selection criteria, wherein the generating of the change instruction to change said data record according to the general rule being used for the generating of the change instruction to change said data record is performed if said local rule complies with at least one of the other local rule selection criteria enabling the generating of the change instruction to change said data record, wherein the generating of the change instruction to change said local rule according to the general rule being used for the generating of the change instruction to change said local rule is performed if said local rule complies with at least one of the local rule selection criteria enabling the generating of the change instruction to change said local rule.

The features may be advantageous as they may provide functionalities to perform changes of the data records and the local rules on the main computer system. In contrast to the embodiment described above the data records are selected in an indirect way, i.e. they are selected when the respective local rules used for validation of changes in these data records comply with selection criteria. Similar to the embodiment described above these change instructions may be generated in batches and/or in an automatic mode after identification of the local rules and/or the data records complying with the respective selection criteria. The schedule of this batch generation of the change instructions may be selected in a way enabling optimum workload of the main system.

According to another embodiment the executing of the generated change instruction to change said data record is performed if said local rule complies with the at least one of the other local rule selection criteria enabling the generating of the change instruction to change said data record, wherein the executing of the generated change instruction to change said local rule is performed if said local rule complies with the at least one of the local rule selection criteria enabling the generating of the change instruction to change said local rule.

These features may be advantageous as they may provide improved consistency of data stored in the main database and improved safety of performance of the database, since instructions to change the local rule may originate from any of the remote computer systems or from the main computer system itself, thus due to execution of other change instructions said local rule may no longer comply with at least one of the localrule selection criteria enabling the generating of the change instruction to change said data record or the local rule. Rechecking of the same condition during execution of said change instruction confirms validity of the said change instruction.

According to another embodiment the main data base comprises a first, a second, and third database, wherein the data records, the local rules, and the general rules are stored in the main database across the first, second, and the third database, the first database storing the data records, the second database storing the local rules, the third database storing the general rules, the data record selection criteria, and the local rule selection criteria.

This way of storing of different types of the data records across the first, the second, and the third database may enable advanced data protection. The data records, which are needed for generation or execution of the change instruction may be retrieved from these databases for processing in a separate processing unit of the computer system and/or by separate secure computer code layer and updated in these databases accordingly if necessary when these operations are executed.

According to another embodiment another remote computer system comprises another local database storing a copy of said data record and a copy of the local rule record comprising said local rule, wherein the computer-implemented method further comprises performing the following on another remote computer system: receiving a change instruction from the user to change said data record; and forwarding the received change instruction to the main computer.

The following is further performed on the main computer system: receiving the forwarded change instruction to change said data record from the another remote computer system. The executing of the received forwarded change instruction further comprises sending an update instruction to update the copy of said data record in the another local database in accordance with the changed data record to the another remote computer system. Wherein when the another generated data record complies with said local rule of the local rule record the executing of the generated change instruction to change said data record further comprises sending an update instruction to update the copy of said data record in the another local database in accordance with the another changed data record to the another remote computer system. The executing of the generated change instruction to change the local rule further comprises sending an update instruction to update the local rule record in the copy of said local rule record stored in the another local database in accordance with the changed local rule to the another remote computer system.

The following is further performed on the another remote computer system: receiving the update instruction to update the copy of said data record in the another local database; receiving the update instruction to update said local rule in the copy of the local rule record stored in the another local database; scheduling execution of any received update instruction prior to execution of any received change instruction; executing the received instruction; executing the received update instruction to update the copy of said data record in the another local database; and executing the received update instruction to update said local rule in the copy of the local rule record stored in the another local database. The execution of the received instruction comprises generating yet another changed data record using the copy of said data record stored in the local database according the received change instruction, wherein the forwarding of the received change instruction to the main computer is performed when the generated yet another changed data record complies with said local rule in the copy of the local rule record.

These features may enable correct processing of (the same) change instructions received from one user on different remote computer systems to change the same record. Execution of each of these instructions is validated against the local rule applied to the current state of the data record to be changed.

Another embodiment provides for a computer readable medium having stored thereon a computer executable code for execution by microprocessors controlling the main computer system and at least one remote computer system, wherein execution of the instructions of the executable code causes the main computer system and the at least one remote computer system to execute a computer-implemented method described above.

Another embodiment provides for a system comprising a main computer system and at least one remote computer system. The main computer system comprises a main database and at least one microprocessor. The main database stores data records, local rule records comprising local rules, and general rule records comprising general rules. The local rules are used for validating change instructions for changing the data records. The general rules are used for generating change instructions for changing the data records and/or local rules. The remote computer system comprises at least one microprocessor. The at least one microprocessor of the remote computer system is configured to perform the following: receiving a change instruction from a user to change a data record; and forwarding the received change instruction to the main computer.

The at least one microprocessor of the main computer system is configured to perform the following: receiving the forwarded change instruction to change said data record from said remote computer system; generating a change instruction to change said data record according to the general rule being used for the generating of the change instruction to change said data record; generating a change instruction to change the local rule according to the general rule being used for the generating of the change instruction to change said local rule; scheduling execution of any generated change instruction prior to execution of any received forwarded change instruction; executing the received forwarded change instruction; executing the generated change instruction to change said data record; and executing the generated change instruction to change said local rule.

The executing of the received forwarded change instruction comprises: generating a changed data record using said data record stored in the main database according to the received forwarded instruction; and if the generated changed data record complies with said local rule in the local rule record stored in the main database updating said data record in the main database in accordance with the changed data record, said local rule being used for validating change instructions for changing said data record. The executing of the generated change instruction to change said data record comprises: generating another changed data record using said data record stored in the main database according to the generated change instruction to change said data record; and updating said data record in the main database in accordance with the another changed data record. The executing of the generated change instruction to change said local rule comprises: generating a changed local rule using said local rule in the local rule record comprising said local rule according to the generated change instruction to change said local rule; and updating the local rule record comprising said local rule in the main database in accordance with the changed local rule.

The system of this embodiment may perform any of the steps of the computer-implemented method described above, wherein the at least one microprocessor of the respective remote computer system is configured to perform the steps of the computer-implemented method performed on the respective remote computer system and the at least one microprocessor of the main computer system is configured to perform the steps of the computer-implemented method performed on the main computer system.

### Brief Description of the Drawings

FIG. 1 is a block diagram showing multiple CRM systems integrated with loyalty and ERP systems using a loyalty interface framework;
FIG. 2 shows an example of a Membership Overview page Ul;
FIG. 3 shows an example of a Partner Overview page Ul with partner types;
FIG. 4 shows an example of the Partner Overview page UI with partner type dimension and relationship;
FIG. 5 shows an example of a loyalty program overview page Ul;
FIG. 6 shows an example of a loyalty reward rule group overview page Ul;
FIG. 7 shows an example of a loyalty reward rule overview page Ul;
FIG. 8 illustrates one example of a UI layer;
FIG. 9 shows customizing for a CRM loyalty program;
FIG. 10 shows customizing for loyalty types in a CRM system;
FIG. 11 shows customizing for a program type in a CRM system;
FIG. 12 shows customizing of member activity categories in a CRM system;
FIG. 13 is a partial representation of a data model of the loyalty interface framework in the CRM system;
FIGS. 14a and 14b are a block diagram of a process for updating a database.

### Detailed Description

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized and that structural, logical, and electrical changes may be made without departing from the scope of the inventive subject matter. Such embodiments of the inventive subject matter may be referred to, individually and/or collectively. The functions or algorithms described herein are implemented in hardware, software or a combination of software and hardware in one embodiment. The software comprises computer executable instructions stored on computer readable media such as memory or other type of storage devices. Further, described functions may correspond to modules, which may be software, hardware, firmware, or any combination thereof. Multiple functions are performed in one or more modules as desired, and the embodiments described are merely examples. The software is executed on a digital signal processor, ASIC, microprocessor, or other type of processor operating on a system, such as a personal computer, server, a router, or other device capable of processing data including network interconnection devices.

Some embodiments implement the functions in two or more specific interconnected hardware modules or devices with related control and data signals communicated between and through the modules, or as portions of an application-specific integrated circuit. Thus, the exemplary process flow is applicable to software, firmware, and hardware implementations.

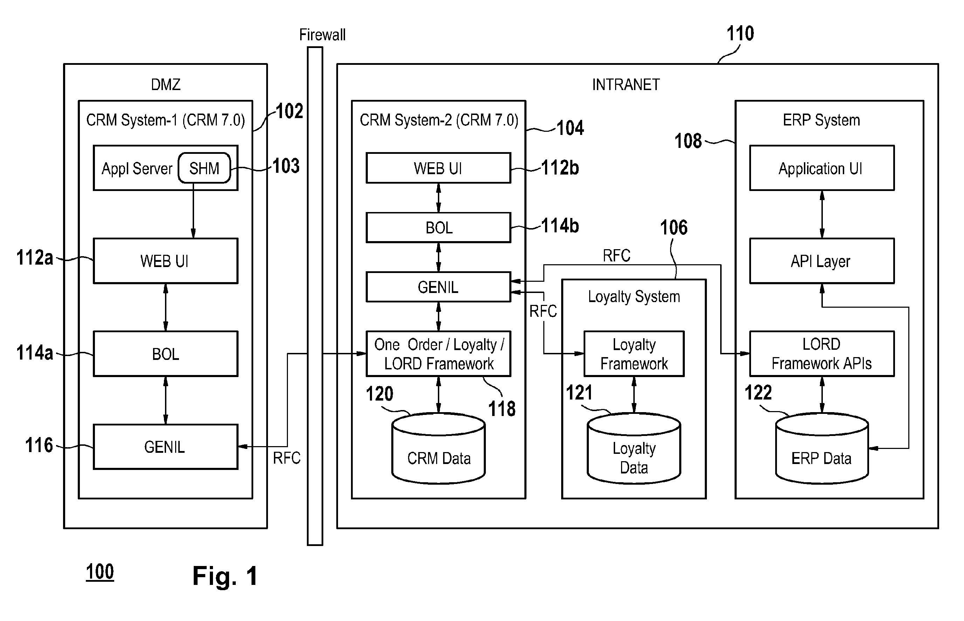

FIG. 1 is a block diagram of a loyalty interface framework system 100 showing multiple CRM systems 102, 104 integrated with a loyalty system 106 and an enterprise resource management (ERP) system 108 using a loyalty interface framework. Alternatively or in addition the systems 102 and 104 may support payment functionalities using real currencies, bonus points, and/or virtual currencies like Bitcoins. Addition of these functionalities reflects modern trend when bonus points of various customer loyalty programs and/or virtual currencies may be exchanged for real currencies or be used for buying goods. In the system 100 shown, CRM system 102 is implemented externally in a DMZ (hereafter "DMZ CRM system") while CRM system 104 (hereafter "internal CRM system") is implemented on an intranet 110. A key for the loyalty interface framework system 100 is a Web UI 112 and a business object layer (BOL) 114 model (in DMZ CRM system 102) which interact via remote function call (RFC) Function Modules in each of internal CRM system 104, loyalty system 106, and ERP system 108, so no data will be persisted in the DMZ CRM system 102. The communication from DMZ CRM system 102 to ERP system 108 occurs via internal CRM system 104. Since loyalty applications need to handle huge volumes of data, loyalty rules are executed separately to avoid resource contention on the database level and application server level between such loyalty applications executed by the loyalty system 106 and CRM applications executed by the internal CRM system 108.

The databases 120, 121, 122 can be described in a generalized way. The CRM database 120 stores data records comprising data entities. Data entities may of different types, e.g. digital, text, Boolean, etc. The types of data entities may be determined by their functions. For instance, data entities used for storing address of the customer/user like town and street of his residence may have "address" type and data entities storing the amount of his bonus/loyalty points, money, and electronic money may have "financial" type.

The database 121 stores another data records. These data records comprise local rules for validation of changes of the data records. They may further limit access of the user to some of the data entities in the data records. For instance, when the user wants to change data entities in his data records having "address" type, the respective local rule will indicate that this change is allowed, alternatively the respective local rule will indicate, that it is not allowed for the user to change entities having "financial" type. In this sense the local rules perform supplementary authorization function by limiting user activities for changing certain data entities in the data records. Alternatively instead of limiting access of users to certain data entities in their data records, the local rules may require additional authorization of users to perform changes in these data entities. The local rules may perform other function, like determining (credit) limits for data entities having "financial" type.

The ERP database stores yet another data records. These data records comprise general rules. The general rules have selection criteria and change instructions associated with them. The data record in the ERP database may comprise one general rule, one or more change instruction associated with the general rule, and one or more selection criteria associated with the general rule. The functioning of the general rule may be illustrated as follows: when a local rule or a data record comply with one or more selection criteria associated with the general rule, then the local rule or the data record are changed according to a change instruction associated with the general rule.

The functioning of the general rules may be illustrated on the following examples. For instance, the general rule may be applied for any data record having data entity "financial" being equal to 500 Bitcoins. When the data record complies with this selection criterion the "bonus" change instruction to increase the data entity by 10% is executed. Another example may be execution of purchase orders. When the data record comprises not executed purchase order specified in corresponding data entities, this data record may be identified according to the selection criteria of the respective general rule and the corresponding change instruction will be executed. The change instruction may trigger execution of the purchase process in the system and change the data entities in the data record representing the status of the purchase order. The RFC Calls from a generic interface layer (GENIL) 116 in the DMZ CRM system 102 to the internal CRM system 104 need to be minimized. For example, when retrieving details of a document (data record), only one call should be made to retrieve all information regarding that particular object (data record or local rule), and not several calls each retrieving only a subset of the information. In some implementations, the RFC connection can have a generic communication user with profiles, so any authorization check to be done in the ERP system 108 is done with the information provided in the RFC call itself. As a result thereof a local data base in the CRM system 104 is built. It stores data records, which changes are requested via the CRM system 104, and local rules validating changes of the stored data records.

In accordance with preferred implementations, the loyalty system 106 is a scalable processing engine that supports online and batch processing of member activities, tier evaluation processing, point expiration processing, etc. The loyalty engine 106 can be accessed from all relevant CRM processes across customer/user services via a call center or the Internet, marketing campaign management (MCM), customer analytics, and others. This architecture also provides loyalty management processes with the integration capabilities to integrate to legacy ERP systems as well as to third party systems.

In some implementations, an RFC call to display or maintain a document can make use of a "One Order/Loyalty/Lean Order" (LORD) framework 118 in the internal CRM system 104 depending on the data from the UI 112. This must be RFC enabled by a generic wrapper function module.

Follow up documents such as sales orders, contracts, etc. are created in the ERP system 108 with the data provided from the UI 112 in DMZ CRM system 102, and passed via the internal CRM system 104 to the ERP system 108. Preferably, there is no direct connection between the DMZ CRM system 102 and the internal ERP system 108 due to security reasons. The data is stored in internal CRM and ERP tables in CRM data repository 120 and ER repository 122, respectively, and not in the DMZ CRM system 102.

There are three generic RFC users which are used for communication purposes from the DMZ CRM system 102 to the internal CRM system 104, from the internal CRM system 104 to the internal ERP system 108, and from internal CRM system 104 to the internal loyalty system 106. The different rules are processed in the loyalty system 106. The internal CRM system 104, the loyalty system 106, and the ERP system 108 located inside a firewall. These three "generic users" have the needed roles and profiles for creating the transactional documents in the CRM and ERP systems 104, 108. The needed customizing data is kept in the shared memory 103 of the DMZ CRM system 102 to avoid performance issues.

Different business events are triggered in the internal CRM system 104 and the loyalty system 106 based on the data from the DMZ CRM system 102, since the business logic resides in the internal CRM system 104 and loyalty system 106. The business events include notification triggering to the needed end users of the application, as well as business rules execution.

Multiple Web UI components can be created and enhanced for Membership, Tiers, Programs, Dimension, Partner Solution, Validate Expertise, Versioning, Training Matrix, Training Transfer, Mass Activity Points, Notes, Partner and Attachments etc. in the DMZ CRM system 102. The existing BOL model can be enhanced to handle data transfers between each Web UI and RFC Function Module in the internal CRM and ERP systems 104, 108, with the support of toolbox classes, which call the RFC function modules in the internal CRM, loyalty and ERP systems 104, 106 and 108. This toolbox class has different methods to READ and MAP the different sub-objects in transaction documents, along with READ and SAVE methods. The RFC function modules calls the One Order/Loyalty/LORD interface 118 which in turn handles the READ, MODIFY and SAVE in the CRM and ERP systems 104, 108.

The data is received from various channels such as the Internet (i.e., the DMZ CRM system 102), from a CRM-like interaction center, a CRM UI, and from via external applications via Web services. The loyalty interface framework system 100 processes Program Management, Membership handling, Point Accruals, Member Activities, Reward Rule Management, Point Activities like Redemption, Expiration, Accruals, Points Determination by rule engine of the loyalty system 106.

Loyalty program management enables set up and maintenance of loyalty programs. Program maintenance includes information about program-related loyalty status levels, tier groups and levels, set up and maintenance of point accounts, as well as program specific point accrual and redemption etc. Loyalty reward rule management includes set up and maintenance of loyalty rules and conditions which are finally being processed by the loyalty system. All points accrued and redeemed by members are recorded within the member's point account.

Loyalty membership represents the participation of an individual person, or organization to a specific loyalty program. Membership is opened by a registration to the loyalty program, either via web-self-service, or call center. It also includes member activities such as sales activities which are finally being accrued or redeemed as points. The loyalty processing engine is highly scalable to process member activities and tier transition evaluation, and is the "heart" of the CRM-based loyalty management solution described herein.

As described above, the loyalty processing engine is one or more layers of the loyalty system, and can be implemented as a scalable processor that either runs online or in batch mode to process member activities. Processing a member's activity will update the member's point account as well as the tier level if certain conditions, as defined in the loyalty program, have been met. Furthermore, in order to continuously check if a certain tier level is still applicable and if accrued points are due to expire based on company and program specific rules and policies, the loyalty processing engine also supports ongoing tier evaluation and point expiration processing. It also supports other activities such as: Accrue & Redeem Points, Update Attributes, Change Tier, Customer Specific Actions etc. Master data synchronization is done from the internal CRM system 104 to the loyalty system 106 for business objects such as Business Partners, Product, Rules, etc.

The basic processing steps of the loyalty processing engine are described in further detail below. Member activities, usually sent by an external application, are read. In this context, all relevant information such as loyalty program, membership, and the member itself can be determined. For each reward rule group being assigned to the loyalty program, the CRM-based loyalty processing engine determines the applicability of the assigned rule, and checks if a campaign has been associated and if enrollment was required. If the member has been enrolled and therefore participates in the promotional campaign, the corresponding rule will be processed and a certain action will be executed. Each action, based on a member's point account, includes accrual, redemption, and return actions to update the point balance. Or, as far as the individual tier levels are concerned, actions can change the tier level, reset or change dynamic member attributes, or execute any other customer specific logic.

The needed customizing details like Status, Categories, Phases, Date Types, Reason Codes, Text types, Partner Functions, Process types, Distribution Channel, Sales Stages, Priority etc. from the internal CRM system 104 are sent to the DMZ CRM system 102 via a report program, which pulls all the needed data from different tables in the internal CRM system repository 120. These details are stored in a shared memory in the DMZ CRM 102 so that multiple RFC calls to the internal CRM system 104 is avoided each time to get the needed details. The shared memory is populated only once in a day with a background job in the DMZ CRM system 102.

In preferred implementations, the web UI 112 is filled with dropdown values which are taken from the shared memory in the DMZ CRM system 102. This approach helps in improving the application performance. The validation business logic resides in the internal CRM system 104, which takes care of any needed authorization checks, mandatory field checks, field validation checks, and proper message handling, etc. when the required fields are entered in the web UI 112 and when the validation is completed in the internal CRM system 104, the data is saved in the database tables in the internal CRM, loyalty and ERP systems 104, 106 and 108. The DMZ CRM system 102 pulls the needed information like partner sales, revenue details, partner credit information, funds details, and status information, from the ERP system 108 via the internal CRM system 104.

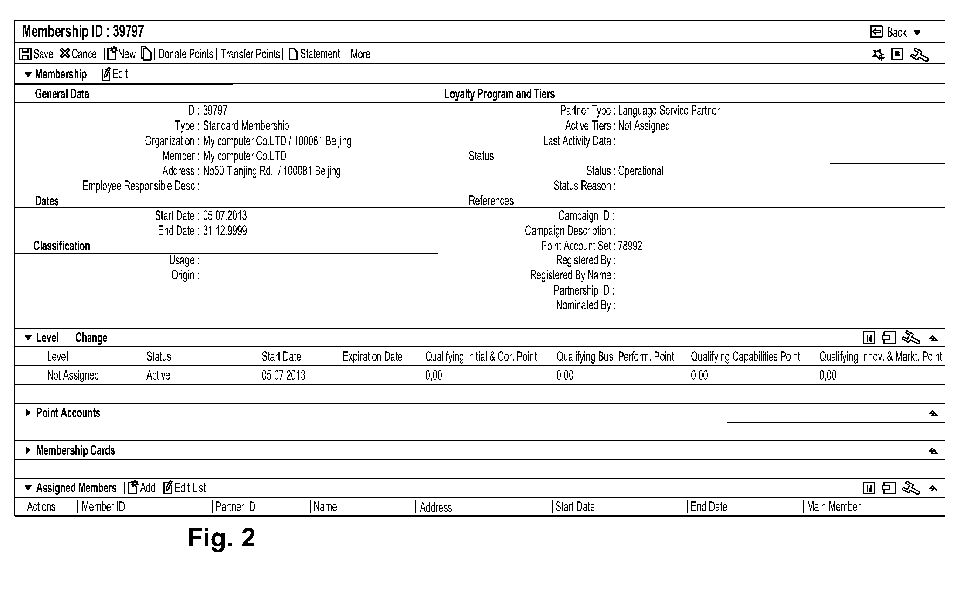

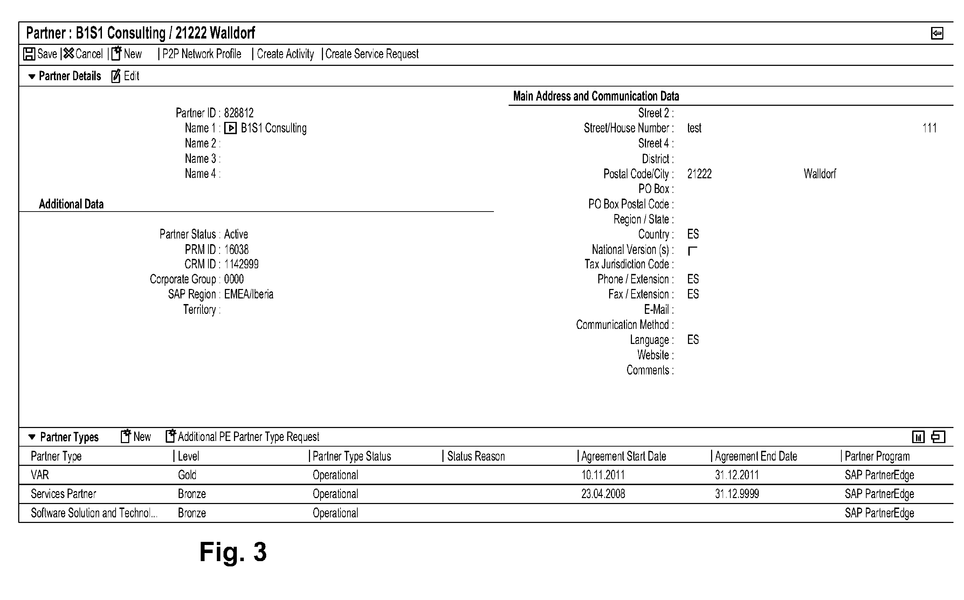

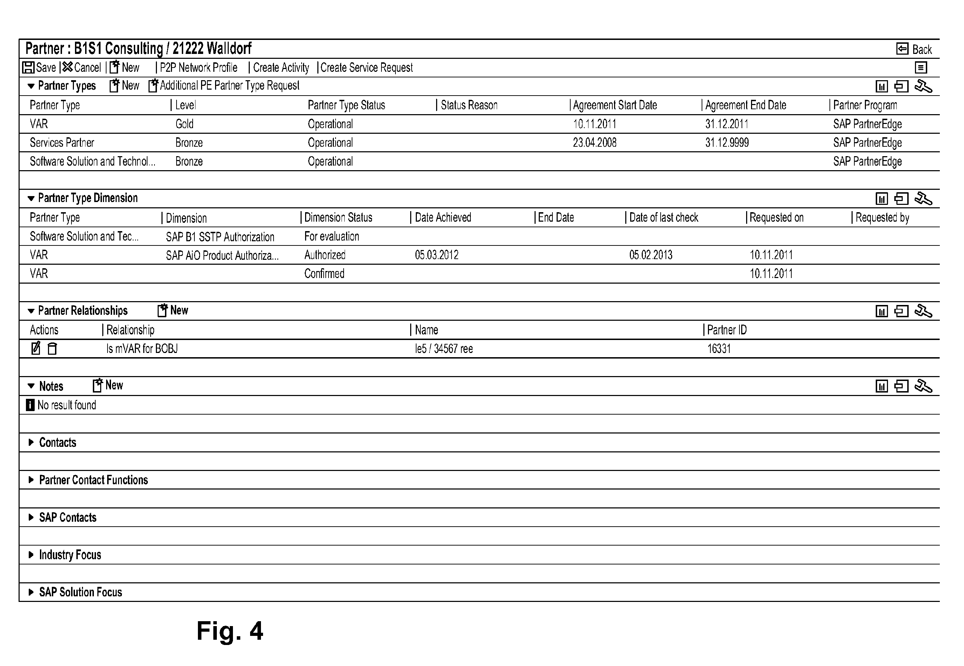

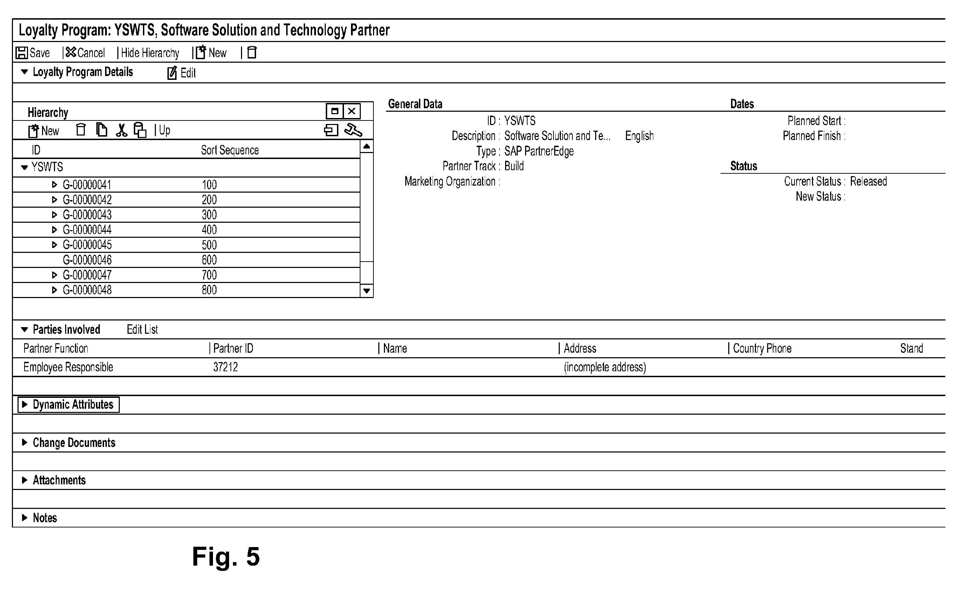

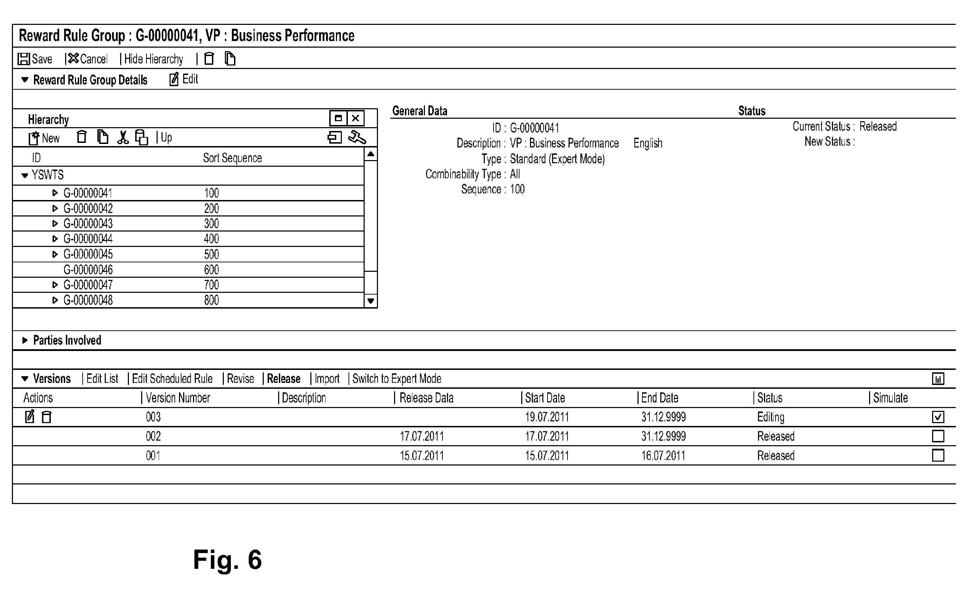

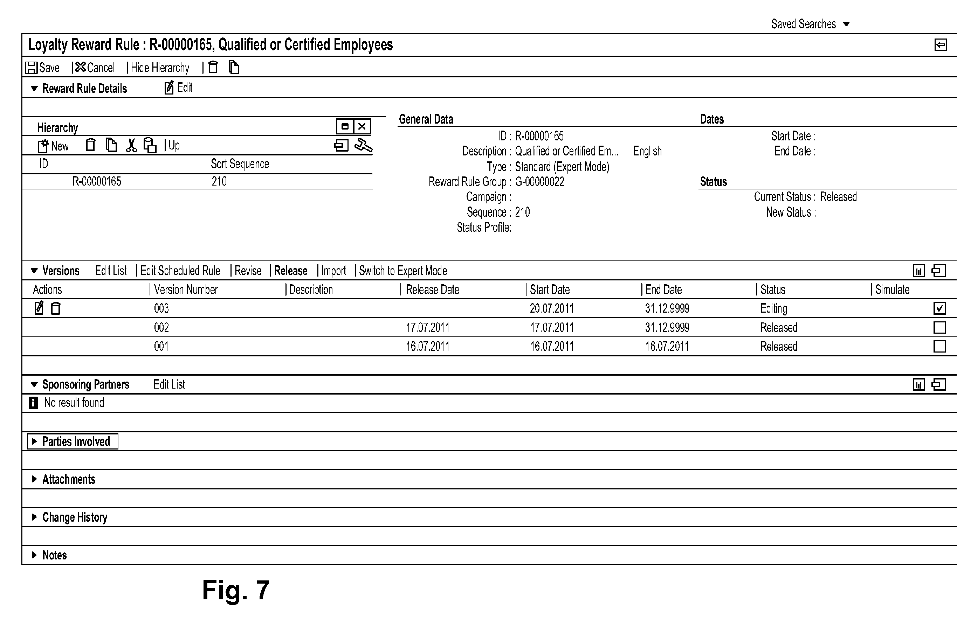

In accordance with exemplary implementations, a number of webpages can be generated by the loyalty interface framework and displayed in the web Ul 112a and 112b. FIG. 2 shows an example of a Membership Overview page UI. FIG. 3 shows an example of a Partner Overview page UI with partner types, and FIG. 4 shows an example of the Partner Overview page UI with partner type dimension and relationship. FIG. 5 shows an example of a loyalty program overview page UI, FIG. 6 shows an example of a loyalty reward rule group overview page Ul, and FIG. 7 shows an example of a loyalty reward rule overview page Ul.

In accordance with preferred implementations, a package hierarchy can be provided for the different UI components, GENIL components, database tables, shared memory classes, message classes, toolbox classes, data dictionary objects, OTR texts, authorization objects, report programs, enterprise services, enhancements, etc.

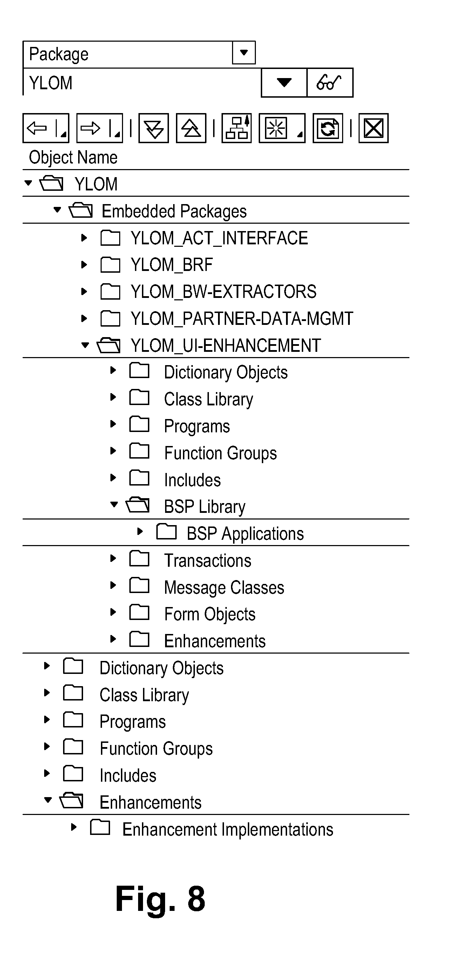

Different packages can be provided for storing different layers in the loyalty interface framework which is stored in the DMZ CRM system 102, and the internal CRM, loyalty and ERP systems 104, 106 and 108. The different UI components can be stored in one package, the BOL and GENIL components can stored in one package, the function groups can be stored in one package, the proxy objects can be stored in one package etc. as shown in FIG. 8, which shows an exemplary package structure of the loyalty interface framework application in the DMZ CRM system 102. As shown in FIG. 8, the UI layer can have different Web UI components such as: YVERSION_MAIN, YBT126H_CALL, YLOM_MASSUPDATE, YLOM_MAIN, YLOM_TRNGMATX, YLOM_TRNGTRNSFR, YGSTEXT, YLOM101H_MA, YLOM102A_MSTIER, YLOM102H_MSH_PM, YLOM102M_MS, YLOM102S_MSH, YLOM105A_PR, YLOMBP_DIMS, YLOMH_ISV_SOL, YLOMMEM_ANREV, YLOMS_PLAT_SOL, YLOM_PLAT_SOL etc.

The Business Object Layer (BOL) 114a and 114b provides modeling of business objects, relations, attributes, searches, access to other business objects, and allows create, read, change, and delete access. The BOL also provides: communication of error and warning messages; subordinate, superordinate and related business objects; root object, dependent object, and access objects; aggregations, associations, relations; buffering of object model, business object properties, relations and changes; and memory and performance optimization.

The GENIL 116 provides a GENIL object model to describe the inner structure of business objects (BOs), which can be defined according to an aggregation hierarchy lead by a root object. Each model object can be understood as a business object node. Business object nodes have only flat structured attributes and are non-overlapping.

Model objects can be connected via relations. Relations can be either of aggregation/composition or association type. Aggregation and composition is only possible between BO nodes of the same BO, associations are also possible to BO nodes of other BOs. In this case the target object needs to be an access object.

Relations are always unidirectional with a defined source and target object. A target object can have multiple parents. This is possible on object type and instance level. Relations have no attributes. Object and relation names have to be unique in the whole model build of the models of the loaded components.

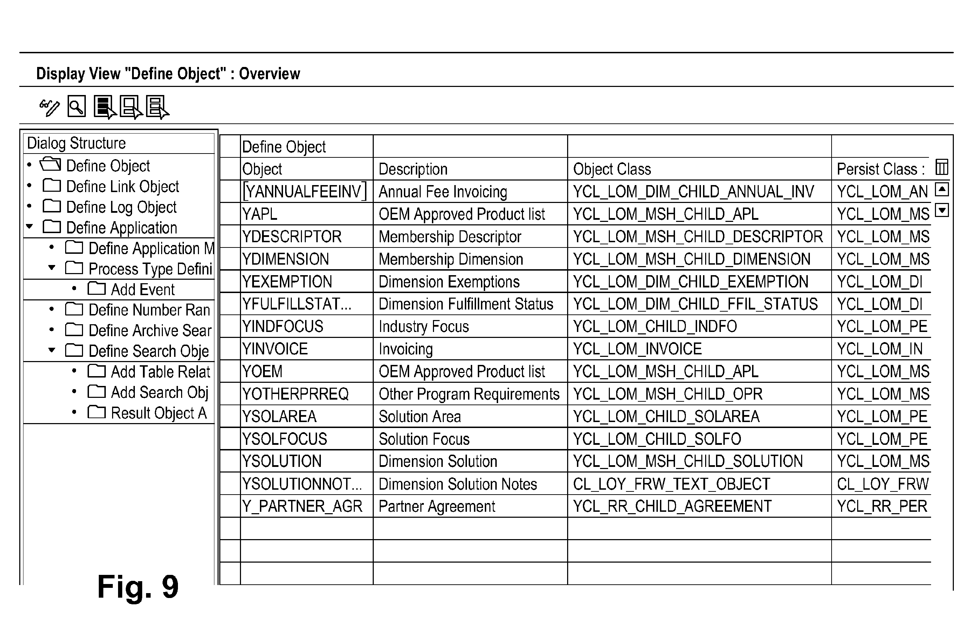

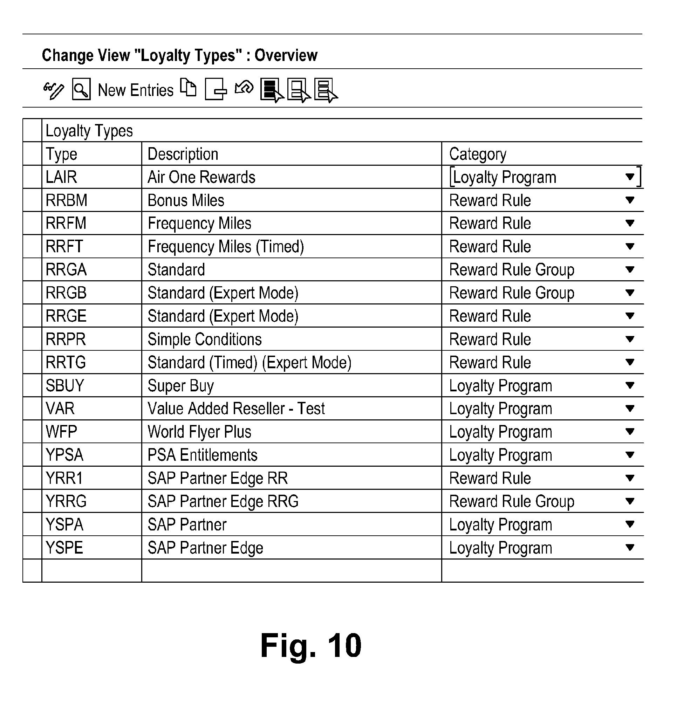

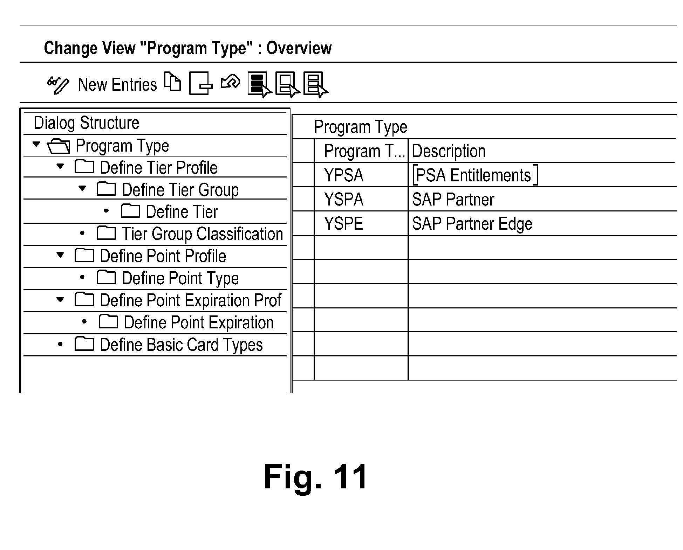

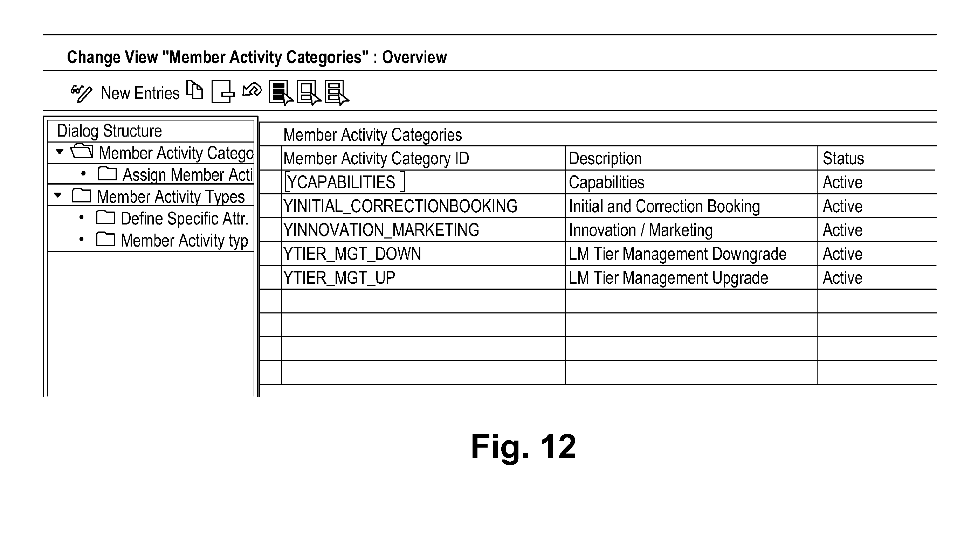

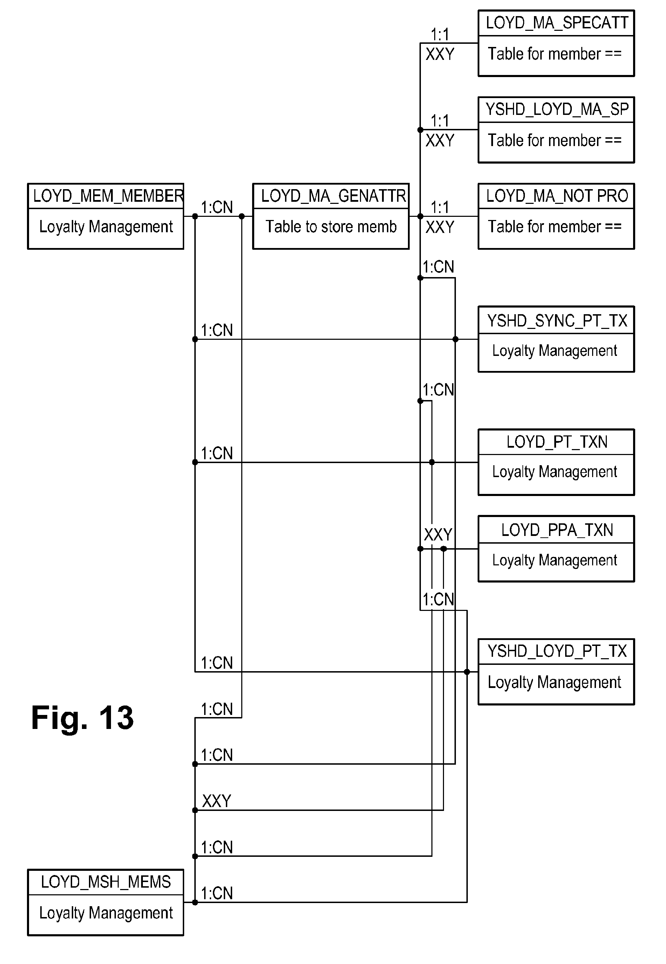

FIGS. 9-13 show various customizing that may be needed when different objects are needed for loyalty management. FIG. 9 shows customizing for a CRM loyalty program, FIG. 10 shows customizing for loyalty types in a CRM system, FIG. 11 shows customizing for a program type in a CRM system, and FIG. 12 shows customizing of member activity categories in a CRM system. FIG. 13 is a partial representation of a data model of the loyalty interface framework in the CRM system.

The framework as implemented in a system and method described herein helps to save the data in an internal CRM system and loyalty system, while keeping the UI in the DMZ CRM system and business logic in the internal CRM and loyalty system. The RFC calls of Read and Save of the UI are optimized in such a manner that it does not hamper performance. The master data needed for creating the transactions, and the values for drop down fields in the UI are pulled from a shared memory in the DMZ CRM so that unnecessary calls to the internal CRM, loyalty and ERP systems are avoided, which leads to better performance.

In this framework, the communication occurs with the UI in the DMZ CRM system, the business logic is in the internal CRM and Loyalty systems, and the RFC Function modules and database tables are in internal CRM and ERP systems. This flexible solution can be configured to meet various loyalty management business strategies across different industries.

One or more aspects or features of the subject matter described herein can be realized in digital electronic circuitry, integrated circuitry, specially designed application specific integrated circuits (ASICs), field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship of client and server arises by virtue of computer programs running on the respective computers and having a client-server relationship to each other.

These computer programs, which can also be referred to as programs, software, software applications, applications, components, or code, include machine instructions for a programmable processor, and can be implemented in a high-level procedural and/or object-oriented programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example as would a processor cache or other random access memory associated with one or more physical processor cores.

To provide for interaction with a user, one or more aspects or features of the subject matter described herein can be implemented on a computer having a display device, such as for example a cathode ray tube (CRT), a liquid crystal display (LCD) or a light emitting diode (LED) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including, but not limited to, acoustic, speech, or tactile input. Other possible input devices include, but are not limited to, touch screens or other touch-sensitive devices such as single or multi-point resistive or capacitive track-pads, voice recognition hardware and software, optical scanners, optical pointers, digital image capture devices and associated interpretation software, and the like.

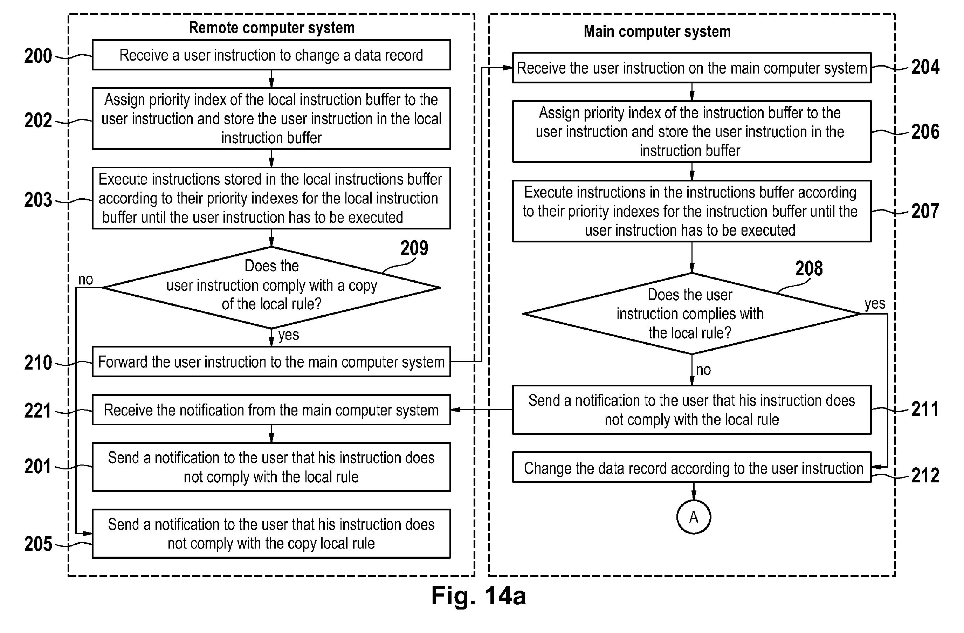

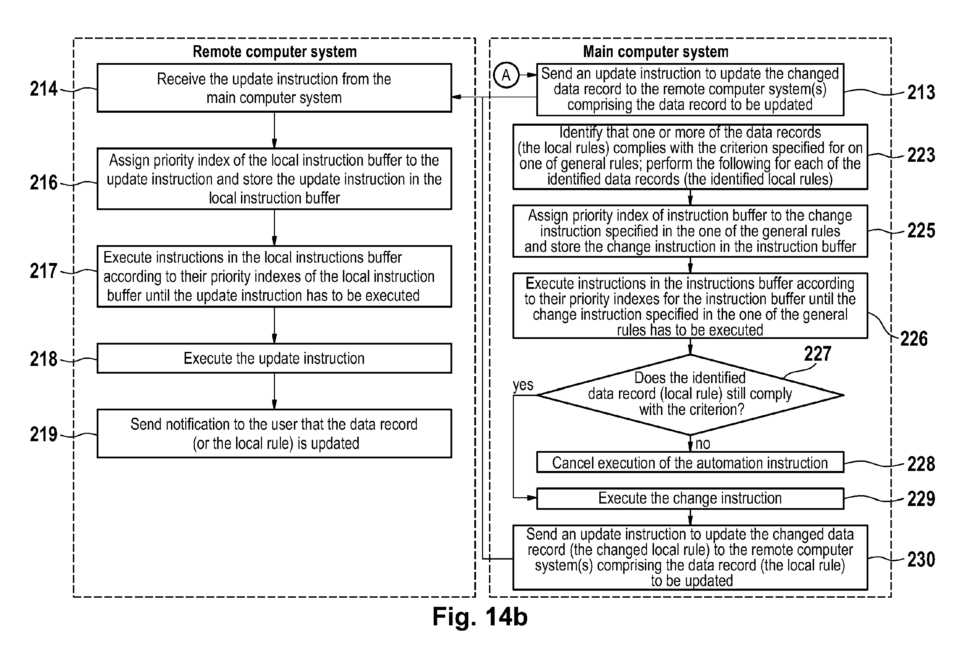

Figs. 14a and 14b illustrate a process flow of operation a system 100 depicted on Fig. 1. The system 100 comprises a main computer system and at least one remote computer system 110. The main system comprises a main database. The main database comprises a fist 120, a second 121, and a third 122 database. The remote computer system 110 comprises a local database. The first database 120 stores data records. The data records comprise data entities having data values. Data entities may have different types. Examples of the data records, the data entities, types of the data entities are described above.

The second database 121 stores local rule records comprising local rules. Each local rule record comprises at least one of the local rules. The local rule may comprise authorizations for different users to change one or more data entities of one or more data records and/or specifications of admissible data values of one or more data entities of one or more data records. The local rules are used for validating change instructions for changing data entities. The change instruction to change the data record comprises at least one of the following changes: calculating a new value for one of the data entities of the data record using values of one or more data entities of the data record or substituting a data value of one of the data entities of the data record by another data value. The correspondence between the local rules and the data records may be established in various ways. For instance, each of the data records may have exactly one respective local rule for validating changes in the each of the data records. Alternatively various sets of the local rules may be used for validating of change instructions of the data records having specific types of data entities, i.e. the set of data entities of the data record, which have specific types, determines the respective set of the local rules for validating change instructions of the data record. As another alternative, a set of the local rules used for validating change instructions to change a data record may be determined by values of a set of data entities of the data record. The latter alternative options may be used in combination, a set of local rules used for validation of change instructions of the data records may be determined by the presence of one or more data entities of one or more specific types and by one or more data values of the respective data entities of the data records being within specified intervals or being equal to predetermined values.

Validation of a change instruction to change a data record may be performed in various ways. The local rule may comprise authorization for different programs/users to change specific data entities in the data record, thus validation of the change instruction may be just an authorization check. As alternative or in addition a change instruction may be validated in the following way: after generation of a new data record using the original data record according to a change instruction the newly generated change instruction is verified against the respective local rule (the respective local rules). Such validation may be for instance controlling whether one or more values of the data entities of the newly generated data record comply with specifications of the respective local rule (the respective local rules) and/or controlling that the newly generated data record comprises data entities as specified in the respective local rule (the respective local rules). The change instruction may comprise an instruction to modify one or more data values of the data entities of the data record using the one or more data values as starting points. For instance, the change instruction may comprise an instruction to increase a value of a data entity by 40%. The change instruction may comprise an instruction to assign a new data value to a specific data entity of a data record.

The third database 122 comprises general rule records comprising general rules. Each of the general rule records comprises at least one of the general rules. The general rule record may comprise one or more described above change instructions to change one or more data records and/or one or more change instructions to change one or more local rules records. In this case generation of the change instruction according to the general rule is a process of extraction of the change instruction from the respective general rule record. The general rules may comprise instructions for generation of the change instructions depending on a data record (a local rule comprised in the local rule record) for which the change instruction(s) is (are) generated. The change instruction(s) are generated for a set of the data records complying with one or more selection criteria. The selection criteria for selecting one of the data records may be at least one of the following criteria: the one of the data records comprises a data entity of the specified type, the value of a data entity of the one of the data records is within a specified interval or equal to one of specified values, the local rule used for validation of the change instructions for changing the one of the data records complies with one or more specific selection criteria for said local rule, wherein one or more specific selection criteria for said local rule may be at least one of the following: said local rule specifies the admissible changes for specified type(s) of one or more of data entities of the one of the data records, said local rule specifies the admissible values of or intervals of values for one or more of specified data entities of the one of the data records. The selection criteria for selecting one of the local rules records comprising the local rule to be modified may be at least one of the following criteria: the one of the local rules determines admissible changes of one or more data entities having specified types, the one or the local rules determines admissible values or admissible value intervals for one or more specified data entities. The selection criteria (criterion) of the data record(s) (the local rule(s)) for which the change instruction(s) are generated using the respective general rule record may be comprised in the same general rule record as the general rule itself. The general rules may be a machine-parsable electronic documents enabling automated computer generation of the change instructions to change he local rule records comprising at least one local rule to be changed and/or automated computer generation of the change instructions to change the data records.

In a process block 200 a change instruction to change a data record is received. It may be received via web user interface of the unit 112a. Copy of the data record specified in the user change instruction and copy (copies) of the respective local rule record(s) comprising the copy (copies) of the local rule(s) for validation of the user change command are stored in the local database of the remote computer system 102. The user change instruction can be verified whether it complies with the copy (copies) of the respective local rule(s) in the decision process block 209 after execution of the process block 200. Alternatively the verification of the user change instruction in the process block 209 may be delayed until other instructions having higher priority index are executed. This may be implemented as depicted in process blocks 202 and 203. In this case a local instruction buffer is generated for the data record specified in the user change instruction. The local instruction buffer may be generated in the unit 114a or in the unit 103. Instructions to change the data record are stored in the local instruction buffer and each of the instructions in this local instruction buffer has its own assigned priority index. The instruction having the highest priority index is executed first and deleted in the local instruction buffer after its execution. Since in a process block 214 the remote computer system receives from the main computer system update instructions for updating one or more copies of the data records and/or update instructions for updating one or more the copies of the local rule records, these update instructions are stored in the same local buffer after assigning respective priority indexes as well if these instructions are related to the same data record as specified in the change instruction received from the user (process blocks 216 and 217). The update instruction to update a copy of a data record is stored in the local instruction buffer if execution of this update instruction results in update of the copy of the data record specified in the change instruction received from the user. The update instruction to update a copy of a local rule is stored in the local instruction buffer if execution of this update instruction results in update of the copy of the local rule which is used for validating of the change instruction received from the user. The update instruction to update a copy of a data record in the local database comprises at least one new data value to be assigned to a specified data entity of the copy of the data record. When an update instruction to update a copy of a data record in the local data base is executed, an updated copy of the data record has the same data entities (i.e. the same type of each of the data entities and the same data value for each of the data entities) as the data record in the main data base at a time when generation of the update instruction was completed on the main computer system (process block 218). The update instruction to update a copy of the local rule in the respective local rule record comprises at least one of the following: adding an additional authorization, deleting an authorization, substituting an authorization in the local rule record with another one, adding an additional specification of admissible data values of one or more data entities, deleting al specification of admissible data values of one or more data entities, substituting a specification of admissible data values of one or more data entities with another one. When an update instruction to update a copy of a local rule record comprising a copy of a local rule is executed, an updated copy of the local rue has the same authorization(s) and specification(s) as the local rule in the respective local rule record in the second data base at a time when generation of the update instruction was completed on the main computer system (process block 218).

After execution of the process block 218 a notification is send to one or more users in a process block 219. If the copy of the local rule was updated in the process block 219, then notifications regarding the update of the copy of the local rule are sent to one or more users which authorizations are specified in the updated copy of the local rule and were specified in the copy of the local rule before the update of the copy of the local rule. If the copy of the data record is updated in the process block 219, then notifications regarding the update of the copy of the data record are sent to one or more users which authorizations to change at least one entity in the updated data record are specified in the respective copy (copies) of the local rule(s).

The update instructions may be received via the unit 116, while the process blocks 202, 203, and 209 may be executed by the unit 114a. The priority indexes of the update instructions are higher than the priority indexes of the change instructions. The priority indexes of the update instructions for updating the copy (copies) of the respective local rule record(s) may be higher than the priority indexes of the update instructions to update the copy of the data record. In a case when two instructions in the local instruction buffer have the same priority index, then the instruction, which was stored in the local instruction buffer first, is executed first. The update instructions may be sent as batch updates comprising a lot of update instructions using remote function calls described above. The batch updates may be sent to and processed on the remote computer system when the work load of the user change instructions is low, for instance when the amount of the change instructions received from users is below a threshold value within a predetermined time interval.

The local instruction buffer may be generated not only of the data record specified in the user instruction or any other data record, which copy is stored in the local database, but for a set of the data records having their copies stored in the local database and a set of respective local rule records comprising local rules for validating changes in the data records of the set of the data records. The data records of the set of the data records may comprise for instance data entities of the same type, each, or alternatively all data records having their copies stored in the local database.

The verification of the change instruction received from the user in the process block 209 may be performed as follows. First a new data record is generated using the copy of the data record specified in the user change instruction according to the user change instruction. Afterwards, it is verified whether the newly generated data record complies with the specifications of the copy of the local rule stored in the respective copy of the local rule record, wherein said local rule is used for the verification of changes in data record specified in the user change instruction. If the verification is successful, then a process block 210 is executed, otherwise a notification is sent to the user in the process block 205. The notification comprises information that the user change instruction does not comply with the copy of the local rule. The information is presented to the user via the web user interface 112a. The user may wait until the copy of the data record and/or the copy (copies) of respective local rule(s) are updated and/or modify his change request and verify whether the modified changed request complies with the copy (copies) of the respective local rule(s). As a result thereof data traffic between the remote computer system and the main computer system is reduced because users have an opportunity to prepare valid change instructions on the remote computer system.

If the validation of the change instruction received from the user is successful in the process block 209, then the received change instruction is forwarded to the main computer system in a process block 210. The process block may be performed by the unit 116.

In a process block 204 the forwarded change instruction is received. It may be received via the unit 118. Although the forwarded change instruction is received from only one remote computer system described above it is clearly seen from the description of this algorithm that the main computer system may operate without failures having any amount of the remote computer systems connected to it. For instance, as it will be clearly seen from the description further on, another forwarded change instruction from another remote computer system will be successfully processed in a correct way even when both of the forwarded change instructions are identical. The data record specified in the received change instruction is stored in the first data base 120, while the respective local rule record(s) comprising the local rule(s) for validation of the user change command are stored in the second database 121. The received change instruction can be verified whether it complies with the respective local rule(s) in the decision process block 208 after execution of the process block 204. Alternatively the verification of the received change instruction in the process block 208 may be delayed until other instructions having higher priority index are executed. This may be implemented as depicted in process blocks 206 and 207. In this case an instruction buffer is generated for the data record specified in the received change instruction. The instruction buffer may be generated in the unit 118. Instructions to change the data record are stored in the instruction buffer and each of the instructions in this instruction buffer has its own assigned priority index. The instruction having the highest priority index is executed first and deleted in the instruction buffer after its execution (206). Since in a process block 223 a change instruction to change the data record (the local rule record) complying with one or more selection criteria is generated, this change instruction is added to the instruction buffer after assigning respective priority indexes as well (225),if its execution causes one or more changes in the data record specified in the forwarded change instruction (if its execution cause update of the of the local rule on the local rule record, which is used for validating of the forwarded change instruction). The generated change instructions may be generated by the unit 118 having secure communicative coupling with the first, second, and third database. The unit 118 may be a special hardware unit or a dedicated software layer. This configuration provides extra data protection because the data records, the local rules, the general rules are retrieved for generation or execution of change instructions from their respective data bases, i.e. the process of generation and processing of the change instructions is performed by external processing unit. The priority indexes of the generated change instructions are higher than the priority indexes of the received change instructions. The priority indexes of the generated change instructions for changing local rule record(s) may be higher than the priority indexes of the generated change instructions to change the data record. In a case when two instructions in the instruction buffer have the same priority index, then the instruction, which was stored in the instruction buffer first, is executed first. The generated update instructions may be generated in batches by the unit 118. The batches of the generated change instructions may be generated and/or processed when the work load of the received change instructions is low, for instance when the amount of the received change instructions received is below a another threshold value within another predetermined time interval.

The instruction buffer may be generated not only of the data record specified in the user instruction or any other data record, which is stored in the first database, but for a set of the data records stored in the first database and a set of respective local rule records comprising local rules for validating changes in the data records of the set of the data records. The data records of the set of the data records may comprise for instance data entities of the same type, each, or alternatively all data records having their copies stored in the local database.

The verification of the received change instruction in the process block 208 may be performed as follows. First a data record is generated using the data record specified in the received change instruction according to the received change instruction. Afterwards, it is verified whether the generated data record complies with the specifications of the local rule stored in the respective local rule record, wherein said local rule is used for the verification of changes in data record specified in the received change instruction. If the verification is successful, then a process block 212 is executed, otherwise a notification is sent to the remote computer system in the process block 211. The notification comprises information that the user change instruction does not comply with the local rule. The notification is received on the remote computer system in a process block 221 and forwarded to the user in a process block 201. The information is presented to the user via the web user interface 112a. The user may wait until the data record and/or the respective local rule are changed by executing subsequent generated change instructions and/or modify his change request and verify whether the modified changed request complies first with the copy (copies) of the respective local rule(s) in the local data base and then with the respective local rules in the second database. As a result thereof a failure free operation is provided. The change instructions received from the user are always validated against the most recent respective local rule(s).

In the process block 212 the data record in the first database is updated in way that all data entities of the data record to be changed in the first database and in the generated data record are identical. After execution of the process block 212 a process block 213 is executed. In the process block 213 an update instruction to update the copy of the data record, which was changed in the first data base, is sent to the remote computer system. This update instruction may be further sent to any other remote computer system comprising the copy of the data record, which was changed in the first data base. The update instruction may comprise only data entities which were changed in the data record stored in the first database after execution of the process block 212. This format of the update instruction may result in a very compact size of it, as a result thereof traffic between the main computer system and the remote computer system(s) is reduced.

Since the in the process block 223 generated change instructions may have their execution (substantially) delayed when stored in the instruction buffer (process block 226), an optional decision process bock 227 may be executed. It is verified in this decision process block, whether the data record (the local rule) still comply with one or more selection criteria, compliance with which has caused the generation of the change instruction. When the data record (the local rule) does not comply any more with the selection criteria the decision process block 227 causes execution of a process block 228, otherwise the decision process block 227 causes execution of the process block 229.

In the process block 228 the execution of the delayed generated instruction is not started and the delayed generated instruction is removed from the instruction buffer.

If the generated change instruction to change the data record is executed in the process block 229 the following is performed. First a data record is generated using the data record specified in the generated change instruction according to the generated change instruction. Afterwards an optional verification process block is performed, wherein it is verified whether the generated data record complies with the specifications of the local rule stored in the respective local rule record, wherein said local rule is used for the verification of changes in data record specified in the generated change instruction. Utilization of this decision process block ensures that the generated change instructions to change the data records are always validated against the most recent respective local rule(s). If the verification not successful the execution of the generated change instruction to change instruction is terminated, otherwise the data record in the first database is updated in way that all data entities of the data record to be changed in the first database and in the generated data record are identical. The latter is performed as well if the optional verification process block is not executed. Afterwards an update instruction to update the copy of the data record, which was changed in the first data base, is sent to the remote computer system. This update instruction may be further sent to any other remote computer system comprising the copy of the data record, which was changed in the first data base. The update instruction may comprise only data entities which were changed in the data record stored in the first database. As it was mentioned before this format of the update instruction may result in a very compact size of it, as a result thereof traffic between the main computer system and the remote computer system(s) is reduced.

If the generated change instruction to change the data record is executed in the process block 229 the following is performed. First a local rule is generated using the local rule specified in the generated change instruction according to the generated change instruction. The change instruction to change the local rule in the respective local rule record comprises at least one of the following: adding an additional authorization, deleting an authorization, substituting an authorization in the local rule record with another one, adding an additional specification of admissible data values of one or more data entities, deleting al specification of admissible data values of one or more data entities, substituting a specification of admissible data values of one or more data entities with another one, calculating a new specification of admissible data values of one or more data entities using the old specification. Afterwards the local rule stored in the second database is updated in accordance with the generated local rule, wherein at least one of the following is performed: adding an additional authorization, deleting an authorization, substituting an authorization in the local rule record with another one, adding an additional specification of admissible data values of one or more data entities, deleting al specification of admissible data values of one or more data entities, substituting a specification of admissible data values of one or more data entities with another one. As a result thereof, the generated local rule and the local rule in the second database have the same sets of authorizations and the same sets of specifications of admissible data values. As a next step, an update instruction to update the copy of the local rule in the respective local rule record, wherein the respective local rule record comprises the copy of the local rule, which was changed in the second data base, is sent to the remote computer system. This update instruction may be further sent to any other remote computer system comprising the copy of the local rule in another respective local rule record, wherein the another respective local rule record comprises the copy of the local rule, which was changed in the second data base. The update instruction may comprise only the list of changes to be performed. The list of changes may comprise at least one of the following: adding an additional authorization, deleting an authorization, substituting an authorization in the local rule record with another one, adding an additional specification of admissible data values of one or more data entities, deleting al specification of admissible data values of one or more data entities, substituting a specification of admissible data values of one or more data entities with another one. This format of the update instruction may result in a compact size of it, as a result thereof traffic between the main computer system and the remote computer system(s) is reduced.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and sub-combinations of the disclosed features and/or combinations and sub-combinations of several further features disclosed above. In addition, the logic flows depicted in the accompanying figures and/or described herein do not necessarily require the particular order shown, or sequential order, to achieve desirable results. Other implementations may be within the scope of the following claims.

## Claims

1. An electronic payment method, wherein execution of payments is registered in a main database (120, 121, 122) of a main computer system (110) using at least one remote computer system (120), the main database storing customer accounts, local rule records comprising local rules, and general rule records comprising general rules, the local rules being used for validating change instructions for changing the customer accounts, the general rules being used for generating change instructions for changing the customer accounts and/or local rules, the computer-implemented method comprising:
• performing the following on the remote computer system:
∘ receiving a payment order from a customer, wherein the payment order is performed by executing a change instruction to change a customer account of the customer(200); and
∘ forwarding the received change instruction to the main computer (210); and
• performing the following on the main computer system:
∘ receiving the forwarded change instruction to change said customer account from said remote computer system (204);
∘ generating a change instruction to change said customer account according to the general rule being used for the generating of the change instruction to change said customer account (223);
∘ generating a change instruction to change the local rule according to the general rule being used for the generating of the change instruction to change said local rule (223);
∘ scheduling execution of any generated change instruction prior to execution of any received forwarded change instruction (225, 226, 206, 207);
∘ executing the received forwarded change instruction, wherein the executing of the received forwarded change instruction comprises:
■ generating a changed customer account using said customer account stored in the main database according to the received forwarded instruction; and
▪ if the generated changed customer account complies with said local rule in the local rule record stored in the main database (208) updating said customer account in the main database in accordance with the changed customer account (212), wherein said local rule is being used for validating change instructions for changing said customer account;
∘ executing the generated change instruction to change said customer account, wherein the executing of the generated change instruction to change said customer account comprises:
▪ generating another changed customer account using said customer account stored in the main database according to the generated change instruction to change said customer account (229); and
▪ updating said customer account in the main database in accordance with the another changed customer account (229); and
∘ executing the generated change instruction to change said local rule, wherein the executing of the generated change instruction to change said local rule comprises:
▪ generating a changed local rule using said local rule in the local rule record comprising said local rule according to the generated change instruction to change said local rule (229); and
▪ updating the local rule record comprising said local rule in the main database in accordance with the changed local rule (229).

2. The electronic payment method of claim 1, wherein said remote computer system comprises a local database storing a copy of said customer account and a copy of the local rule record comprising said local rule, wherein the executing of the received forwarded change instruction further comprises:
▪ if the generated changed customer account complies with said local rule in the local rule record stored in the main database sending an update instruction to update the copy of said customer account in the local database in accordance with the changed customer account to said remote computer system (213);
wherein the executing of the generated change instruction to change said customer account further comprises sending an update instruction to update the copy of said customer account in the local database in accordance with the another changed customer account to said remote computer system (230);
wherein the executing of the generated change instruction to change the local rule further comprises sending an update instruction to update said local rule record in the copy of the local rule record stored in the local database in accordance with the changed local rule to said remote computer system (230);
wherein the following is further performed on the remote computer system:
∘ receiving the update instruction to update the copy of said customer account in the local database (214);
∘ receiving the update instruction to update said local rule in the copy of the local rule record stored in the local database (214);
∘ scheduling execution of any received update instruction prior to execution of any received change instruction (202, 203, 216, 217);
∘ executing the received instruction, wherein the execution of the received instruction comprises generating yet another changed customer account using the copy of said customer account stored in the local database according the received change instruction, wherein the forwarding of the received change instruction to the main computer is performed when the generated yet another changed customer account complies with said local rule in the copy of the local rule record (209);
∘ executing the received update instruction to update the copy of said customer account in the local database (218); and
∘ executing the received update instruction to update said local rule in the copy of the local rule record stored in the local database (218).

3. A computer-implemented method of updating a main database (120, 121, 122) of a main computer system (110) using at least one remote computer system (120), the main database storing data records, local rule records comprising local rules, and general rule records comprising general rules, the local rules being used for validating change instructions for changing the data records, the general rules being used for generating change instructions for changing the data records and/or local rules, the computer-implemented method comprising:
• performing the following on the remote computer system:
∘ receiving a change instruction from a user to change the data record (200); and
∘ forwarding the received change instruction to the main computer (210); and
• performing the following on the main computer system:
∘ receiving the forwarded change instruction to change said data record from said remote computer system (204);
∘ generating a change instruction to change said data record according to the general rule being used for the generating of the change instruction to change said data record (223);
∘ generating a change instruction to change the local rule according to the general rule being used for the generating of the change instruction to change said local rule (223);
∘ scheduling execution of any generated change instruction prior to execution of any received forwarded change instruction (225, 226, 206, 207);
∘ executing the received forwarded change instruction, wherein the executing of the received forwarded change instruction comprises:
▪ generating a changed data record using said data record stored in the main database according to the received forwarded instruction; and
▪ if the generated changed data record complies with said local rule in the local rule record stored in the main database (208) updating said data record in the main database in accordance with the changed data record (212), wherein said local rule is being used for validating change instructions for changing said data record;
∘ executing the generated change instruction to change said data record, wherein the executing of the generated change instruction to change said data record comprises:
▪ generating another changed data record using said data record stored in the main database according to the generated change instruction to change said data record (229); and
▪ updating said data record in the main database in accordance with the another changed data record (229); and
∘ executing the generated change instruction to change said local rule, wherein the executing of the generated change instruction to change said local rule comprises:
▪ generating a changed local rule using said local rule in the local rule record comprising said local rule according to the generated change instruction to change said local rule (229); and
▪ updating the local rule record comprising said local rule in the main database in accordance with the changed local rule (229).

4. The computer-implemented method of claim 3, wherein said remote computer system comprises a local database storing a copy of said data record and a copy of the local rule record comprising said local rule, wherein the executing of the received forwarded change instruction further comprises:
▪ if the generated changed data record complies with said local rule in the local rule record stored in the main database sending an update instruction to update the copy of said data record in the local database in accordance with the changed data record to said remote computer system (213);
wherein the executing of the generated change instruction to change said data record further comprises sending an update instruction to update the copy of said data record in the local database in accordance with the another changed data record to said remote computer system (230);
wherein the executing of the generated change instruction to change the local rule further comprises sending an update instruction to update said local rule record in the copy of the local rule record stored in the local database in accordance with the changed local rule to said remote computer system (230);
wherein the following is further performed on the remote computer system:
∘ receiving the update instruction to update the copy of said data record in the local database (214);
∘ receiving the update instruction to update said local rule in the copy of the local rule record stored in the local database (214);
∘ scheduling execution of any received update instruction prior to execution of any received change instruction (202, 203, 216, 217);
∘ executing the received instruction, wherein the execution of the received instruction comprises generating yet another changed data record using the copy of said data record stored in the local database according the received change instruction, wherein the forwarding of the received change instruction to the main computer is performed when the generated yet another changed data record complies with said local rule in the copy of the local rule record (209);
∘ executing the received update instruction to update the copy of said data record in the local database (218); and
∘ executing the received update instruction to update said local rule in the copy of the local rule record stored in the local database (218).

5. The computer-implemented method of claim 4, wherein the executing of the received forwarded change instruction further comprises:
▪ if the generated changed data record does not comply with said local rule of the local rule record sending a message to said local computer system indicating, that the change instruction received from the user does not comply with the local rule in the local rule record stored in the main database (208, 211);
wherein the execution of the received instruction further comprises: sending a message to the user indicating that the change instruction received from the user does not comply with said local rule in the copy of the local rule record stored in the local database if the generated yet another changed data record does not comply with said local rule in the copy of the local rule record (209, 205);
wherein the following is further performed on the remote computer system:
∘ sending a message to the user indicating that said data record is updated after the executing of the received update instruction to update the copy of said data record in the local database (219);
∘ receiving the message indicating that the change instruction received from the user does not comply with the local rule in the local rule record stored in the main database (221); and
∘ forwarding the message to the user indicating that the change instruction received from the user does not comply with the local rule in the local rule record stored in the main database (201).

6. The computer-implemented method of any one of claims 4 or 5, wherein the updating of said data record in the main database in accordance with the another changed data record and the sending of the update instruction to update the copy of said data record in the local database in accordance with the another changed data record to said remote computer system are performed when the another generated data record complies with said local rule of the local rule record.

7. The computer-implemented method of any one of the preceding claims 3-6, wherein the general rules are used for generating change instructions for changing the data records complying with data record selection criteria and/or the local rules complying with local rule selection criteria, wherein the generating of the change instruction to change said data record according to the general rule being used for the generating of the change instruction to change said data record is performed if said data record complies with at least one of the data record selection criteria enabling the generating of the change instruction to change said data record, wherein the generating of the change instruction to change said local rule according to the general rule being used for the generating of the change instruction to change said local rule is performed if said local rule complies with at least one of the local rule selection criteria enabling the generating of the change instruction to change said local rule.

8. The computer implemented method of claim 7, wherein the executing of the generated change instruction to change said data record is performed if said data record complies with the at least one of the data record selection criteria enabling the generating of the change instruction to change said data record (227, 228), wherein the executing of the generated change instruction to change said local rule is performed if said local rule complies with the at least one of the local rule selection criteria enabling the generating of the change instruction to change said local rule (227, 228).

9. The computer-implemented method of any one of the preceding claims 3-6, wherein the general rules are used for generating change instructions for changing the local rules complying with local rule selection criteria and/or the data records having the respective local rules for validating the change instructions for changing them, wherein the respective rules comply with other local rule selection criteria, wherein the generating of the change instruction to change said data record according to the general rule being used for the generating of the change instruction to change said data record is performed if said local rule complies with at least one of the other local rule selection criteria enabling the generating of the change instruction to change said data record, wherein the generating of the change instruction to change said local rule according to the general rule being used for the generating of the change instruction to change said local rule is performed if said local rule complies with at least one of the local rule selection criteria enabling the generating of the change instruction to change said local rule.

10. The computer implemented method of claim 9, wherein the executing of the generated change instruction to change said data record is performed if said local rule complies with the at least one of the other local rule selection criteria enabling the generating of the change instruction to change said data record (227, 228), wherein the executing of the generated change instruction to change said local rule is performed if said local rule complies with the at least one of the local rule selection criteria enabling the generating of the change instruction to change said local rule (227, 228).

11. The computer-implemented method of any one of the preceding claims 7-10, wherein the main data base comprises a first (120), a second (121), and third database (122), wherein the data records, the local rules, and the general rules are stored in the main database across the first, second, and the third database, the first database storing the data records, the second database storing the local rules, the third database storing the general rules, the data record selection criteria, and the local rule selection criteria.

12. The computer-implemented method of any one of the preceding claims 4-11, wherein another remote computer system comprises another local database storing a copy of said data record and a copy of the local rule record comprising said local rule, wherein the computer-implemented method further comprises:
• performing the following on another remote computer system:
∘ receiving a change instruction from the user to change said data record; and
∘ forwarding the received change instruction to the main computer;
wherein the following is further performed on the main computer system:
∘ receiving the forwarded change instruction to change said data record from the another remote computer system;
wherein the executing of the received forwarded change instruction further comprises sending an update instruction to update the copy of said data record in the another local database in accordance with the changed data record to the another remote computer system;
wherein the executing of the generated change instruction to change said data record further comprises sending an update instruction to update the copy of said data record in the another local database in accordance with the another changed data record to the another remote computer system; wherein the executing of the generated change instruction to change the local rule further comprises sending an update instruction to update the local rule record in the copy of said local rule record stored in the another local database in accordance with the changed local rule to the another remote computer system;
wherein the following is further performed on the another remote computer system:
∘ receiving the update instruction to update the copy of said data record in the another local database;
∘ receiving the update instruction to update said local rule in the copy of the local rule record stored in the another local database;
∘ scheduling execution of any received update instruction prior to execution of any received change instruction;
∘ executing the received instruction, wherein the execution of the received instruction comprises generating yet another changed data record using the copy of said data record stored in the local database according the received change instruction, wherein the forwarding of the received change instruction to the main computer is performed when the generated yet another changed data record complies with said local rule in the copy of the local rule record;
∘ executing the received update instruction to update the copy of said data record in the another local database; and
∘ executing the received update instruction to update said local rule in the copy of the local rule record stored in the another local database.

13. A system comprising (100) a main computer system (110) and at least one remote computer system (102), the main computer system comprising a main database (120, 121, 122) and at least one microprocessor, the main database storing data records, local rule records comprising local rules, and general rule records comprising general rules, the local rules being used for validating change instructions for changing the data records, the general rules being used for generating change instructions for changing the data records and/or local rules, the remote computer system comprising at least one microprocessor, wherein the at least one microprocessor of the remote computer system is configured to perform the following:
∘ receiving a change instruction from a user to change a data record (200); and
∘ forwarding the received change instruction to the main computer (210);
wherein the at least one microprocessor of the main computer system is configured to perform the following:
∘ receiving the forwarded change instruction to change said data record from said remote computer system (204);
∘ generating a change instruction to change said data record according to the general rule being used for the generating of the change instruction to change said data record (223);
∘ generating a change instruction to change the local rule according to the general rule being used for the generating of the change instruction to change said local rule (223);
∘ scheduling execution of any generated change instruction prior to execution of any received forwarded change instruction (225, 226, 206, 207);
∘ executing the received forwarded change instruction, wherein the executing of the received forwarded change instruction comprises:
▪ generating a changed data record using said data record stored in the main database according to the received forwarded instruction; and
▪ if the generated changed data record complies with said local rule in the local rule record stored in the main database (208) updating said data record in the main database in accordance with the changed data record (212), said local rule being used for validating change instructions for changing said data record;
∘ executing the generated change instruction to change said data record, wherein the executing of the generated change instruction to change said data record comprises:
▪ generating another changed data record using said data record stored in the main database according to the generated change instruction to change said data record (229); and
▪ updating said data record in the main database in accordance with the another changed data record (229); and
∘ executing the generated change instruction to change said local rule, wherein the executing of the generated change instruction to change said local rule comprises:
▪ generating a changed local rule using said local rule in the local rule record comprising said local rule according to the generated change instruction to change said local rule (229); and
▪ updating the local rule record comprising said local rule in the main database in accordance with the changed local rule (229).

14. The system of claim 13, wherein said remote computer system comprises a local database storing a copy of said data record and a copy of the local rule record comprising said local rule, wherein the executing of the received forwarded change instruction further comprises:
▪ if the generated changed data record complies with said local rule in the local rule record stored in the main database sending an update instruction to update the copy of said data record in the local database in accordance with the changed data record to said remote computer system (213);
wherein the executing of the generated change instruction to change said data record further comprises sending an update instruction to update the copy of said data record in the local database in accordance with the another changed data record to said remote computer system (230);
wherein the executing of the generated change instruction to change the local rule further comprises sending an update instruction to update said local rule record in the copy of the local rule record stored in the local database in accordance with the changed local rule to said remote computer system (230);
wherein the at least one microprocessor of the remote computer system is further configured to perform the following:
∘ receiving the update instruction to update the copy of said data record in the local database (214);
∘ receiving the update instruction to update said local rule in the copy of the local rule record stored in the local database (214);
∘ scheduling execution of any received update instruction prior to execution of any received change instruction (202, 203, 216, 217);
∘ executing the received instruction, wherein the execution of the received instruction comprises generating yet another changed data record using the copy of said data record stored in the local database according the received change instruction, wherein the forwarding of the received change instruction to the main computer is performed when the generated yet another changed data record complies with said local rule in the copy of the local rule record (209);
∘ executing the received update instruction to update the copy of said data record in the local database (218); and
∘ executing the received update instruction to update said local rule in the copy of the local rule record stored in the local database(218).

15. A computer readable medium having stored thereon a computer executable code for execution by microprocessors controlling the main computer system and at least one remote computer system, wherein execution of the instructions of the executable code causes the main computer system and the at least one remote computer system to execute a computer-implemented method of claims 1-12.
